# EUROPEAN PATENT SPECIFICATION

(11) **EP 4 609 141 B1**
(45) Date of publication and mention of the grant of the patent: **07.10.2026**
(21) Application number: 23808885.0
(22) Date of filing: 18.10.2023
(51) Int. Cl.: F28D 20/00, F28D 7/12, F28D 17/00, F28F 9/22, F28F 9/013, F28F 19/01, F01K 3/18, F16L 59/14

(54) **DEVICE AND APPARATUS FOR STORING AND RELEASING THERMAL ENERGY AND ENERGY TRANSFORMATION AND STORAGE PLANT**
VORRICHTUNG UND VORRICHTUNG ZUR SPEICHERUNG UND ABGABE VON WÄRMEENERGIE SOWIE ENERGIEUMWANDLUNGS- UND -SPEICHERANLAGE
DISPOSITIF ET APPAREIL DE STOCKAGE ET DE LIBÉRATION D'ÉNERGIE THERMIQUE ET INSTALLATION DE TRANSFORMATION ET DE STOCKAGE D'ÉNERGIE

(30) Priority: 25.10.2022 IT 202200022011
(43) Date of publication of application: 03.09.2025
(73) Proprietor: Energy Dome Operations S.r.l., 20123 Milano (IT)
(72) Inventor: SPADACINI, Claudio, 20131 Milano (IT); RIZZI, Dario, 20131 Milano (IT)
(74) Representative: PGA S.p.A.
(86) International application number: PCT/IB2023/060509
(87) International publication number: WO 2024/089537

(56) References cited:
- EP-A1- 2 058 619
- WO-A2-2011/094371
- WO-A2-2013/160650
- JP-A- 2006 038 328
- JP-A- 2006 132 806

## Description

### Field of the invention

The present invention has as its object a device and an apparatus for storing and releasing thermal energy and an energy transformation and storage plant.

More precisely, the present invention has as its object a device and an apparatus capable of storing and releasing energy in the form of heat, known with the English term of "Thermal Energy Storage" (TES), which can be used in different types of plants, for example for storing heat deriving from solar plants to be later reused. In particular, the device object of the invention is configured to store sensitive heat by means of a temperature variation of a thermal mass.

### Definitions

In the present description and in the attached claims reference will be made to the following definitions.
▪ Thermal mass: material for storing thermal energy in the form of sensitive heat;
▪ Solid inert material: solid material that does not generate reversible or irreversible chemical reactions with the process fluid;
▪ Incoherent material: material formed by bodies/elements not joined together, such as stones, gravel or metal or ceramic spheres/granules, the shape thereof fits the container wherein it is contained;
▪ Cohesive material: material that has a shape of its own, as opposed to the incoherent material the shape thereof fits the container wherein it is contained;
▪ Thermocline: transition and separation layer between a higher temperature zone and a lower temperature zone;
▪ Thermodynamic cycle (CT): thermodynamic transformation from a point X to a point Y, wherein X coincides with Y; the CT unlike the TTC (Cyclic thermodynamic transformation) referred to below has no mass accumulations (significant for energy purposes) within the cycle, while the TTC typically works between two storages of working fluid, one initial and the other one final;
▪ Cyclic thermodynamic transformation (TTC): thermodynamic transformation from a point X to a point Y and from a point Y to a point X, without necessarily passing through the same intermediate points;
▪ Closed CT and/or TTC: without mass exchange (significant for energy purposes) with the atmosphere;
▪ Open CT and/or TTC: with mass exchange (significant for energy purposes) with the atmosphere.

### Background of the invention

In the field of "Thermal Energy Storage" (TES) with accumulation of sensitive heat are known systems which comprise one or more reservoirs which contain a thermal mass. The thermal mass comprises incoherent material, i.e. material formed by bodies/elements not joined together, such as stones, gravel or metal or ceramic spheres/granules. The thermal mass can also comprise cohesive material, as concrete or ceramic or metal. The thermal mass is lapped by a working fluid conveyed in the reservoir, or in each reservoir, through an inlet and an outlet connected to appropriate ducts. When a hot fluid laps the thermal mass, it releases heat to said thermal mass which stores it. When a cold fluid laps the thermal mass, said thermal mass, previously heated, releases heat to the cold fluid which is heated.

The public document WO 2011/094371 A2 shows a device for storing heat comprising a cylindrical container having an inner wall and an outer wall and containing a plurality of elements of material for storing thermal energy. The device comprises a first opening and a second opening located on a side of the container and a tube inside the container, connected to the first opening and having an end spaced from the first opening. WO2011/094371 discloses a device according to the preamble of claim 1.

The public document WO 2013/160650 A2 shows an accumulator which comprises a chamber containing a plurality of thermal storage layers permeable to gas arranged subsequently downwards between an inlet and an outlet and surrounded by an insulator, such that the gas flows from the inlet to the outlet of the gas through the layers for transferring the thermal energy to the or from the storage means.

The public document JP 2006132806 A shows a module for the storage of heat which comprises a series of piled elements provided with undulations.

The public document JP 2006 038328 A shows a device for storing heat provided with a container and with elements shaped as plates housed in the container and distanced by spacers.

The public document EP 2058619 A1 shows an accumulator of heat formed by a reservoir of liquid surrounded by vacuum-sealed insulating layers.

### Summary

In this field, the Applicant has set itself as purpose to realize a device and an apparatus for storing and releasing thermal energy which ensure better performances with respect to the known systems both referring to the energetical aspects and relatively to the mechanical aspects, and also from the point of view of the optimization of the cost.

In particular, the Applicant has set itself as purpose to realize a particular structure of the reservoir, or of each reservoir, which houses the thermal mass and through which the previously hot fluid is made to flow and then cold destined to release heat to the thermal mass and to absorb heat from the thermal mass.

The Applicant has found that the above indicated purposes and also others can be reached through a device and/or an apparatus according to the attached claims and/or according to one or more of the following aspects.

In a first independent aspect, the present invention refers to a device for storing and releasing thermal energy, comprising:
a reservoir internally delimiting a containment volume;
a first conduit configured to fluidly connect the containment volume with a first pipeline external to the reservoir, wherein the first conduit has a first opening that opens in the containment volume at a first end of the reservoir;
a second conduit configured to fluidly connect the containment volume with a second pipeline external to the reservoir; wherein the second conduit has a second opening that opens in the containment volume at a second end of the reservoir opposite the first end;
solid inert material disposed in the containment volume and configured to allow a fluid to flow through said containment volume from the first opening to the second opening or vice versa;
wherein the solid inert material is configured to store/retain heat released from the fluid or to release heat to the fluid during the transit of said fluid.

In a second aspect according to the first aspect, the reservoir is configured to optionally work in a vertical position such that the first end of the reservoir is disposed at the bottom and the second end of the reservoir is disposed at the top; wherein the first conduit and the second conduit open externally at the first end of the reservoir and said first external pipeline and second external pipeline are located near said first end;
wherein the second conduit comprises, or is connected to, a tube located at least partially within the containment volume and the second opening is formed on a terminal end of said tube located near the second end of the reservoir, such that the containment volume is delimited by a radially inner surface of the reservoir and by a radially outer surface of the tube.

In an aspect, the solid inert material is incoherent material, i.e. comprises a plurality of bodies or elements not joined together, such as stones or gravel or metal spheres, such as iron, or ceramic.

In an aspect, the solid inert material is cohesive material within which there are delimited passages and/or cavities. For example, the cohesive material is a unique material block which has cavities such as to obtain good characteristics of thermal exchange. Alternatively, the solid inert material comprises a plurality of blocks which support the one with the other and each of them has the cavities such as to obtain good characteristics of thermal exchange.

In an aspect, the solid inert material has a Biot number lower than 1, preferably lower than 0.1.

The Biot number is a non-dimensional quantity used in the calculation of heat transfer and provides an index of the ratio between the thermal resistances within a body and the surface of the body. This ratio, from a thermal gradient applied to its surface, determines whether the temperatures within the body will vary significantly in space as the body heats or cools over time.

The Applicant has verified that, if the inert solid is incoherent material, the vertical orientation of the reservoir with inlet at the bottom and outlet at the top or vice versa allows the incoherent material to arrange itself so that it occupies the entire transversal section of the reservoir, so that it does not leave empty spaces that the fluid would otherwise travel through without exchanging heat with the incoherent material, thus lengthening the thermocline. In fact, if the reservoir were oriented horizontally with inlet and outlet on opposite sides but at the same level, the incoherent material might not occupy the entire transversal section of the reservoir with respect to a direction of motion of the fluid, so that an upper portion of the reservoir might be empty and the transit of the fluid through this portion would not allow an efficient exchange of heat with the incoherent material. Furthermore, even if in the reservoir oriented horizontally, internal buffers were installed, this phenomenon could possibly be reduced but not eliminated.

The Applicant has verified that the positioning of the tube inside the reservoir allows to realize such a tube with walls of reduced thickness, saving material, because the pressure of the fluid inside the tube is balanced by the pressure of the fluid in the containment volume, i.e. around the tube. Furthermore, given the reduced thickness, the inner tube has also a reduced thermal inertia. This allows to keep the front steep because the inner tube heats up quickly with respect to the thermal mass. The internal positioning of the tube prevents the hot fluid flowing through it from dissipating heat to the external environment.

In a third aspect according to the first aspect or according to the second aspect, the reservoir comprises an outer casing, configured to withstand a fluid pressure, an inner casing, bearing the radially inner surface and delimiting the containment volume, and thermally insulating material placed in a cavity delimited between the outer casing and the inner casing; wherein the inner casing has passages to allow the fluid to fill also the cavity; wherein, if the inert material is a solid that heats up and cools down, the inner casing has a thermal inertia similar to a thermal inertia of the solid inert material, such that the inner casing and the solid inert material heat together or so that they have a limited temperature difference during the heating (charging) and the cooling (discharging). These passages are placed at the same pressure level so that to bring in pressure equilibrium the cavity with the containment volume. In this manner, it is prevented that a fluid flow is generated in the cavity, i.e. the fluid is stationary in the cavity.

The Applicant has verified that the adoption of the double enclosure according to the third aspect allows to realize the inner casing of reduced thickness, saving material, because it does not have to withstand the pressure of the fluid, since the fluid is present both in the containment volume and in the cavity.

The thin inner casing is also capable of working in the elastic deformation field even if subject to deformations imposed by the solid inert material. In addition, the reduced thickness of the inner casing allows to limit heat flows in the wall of said inner casing, in the axial direction, which lies in contact with the fluid, avoiding to transfer heat from the higher temperature zone to the lower temperature zone, useful to preserve a narrow thermocline.

The reduced thicknesses of the tube and of the inner casing also allow to reduce the weight of the reservoir and thus facilitate transport and installation.

The Applicant has verified that the cavity with the thermally insulating material allows to reduce thermal losses to the external environment.

The Applicant has also verified that the similarity of the thermal inertias allows to reduce the amount of mechanical stresses due to thermal expansions between the inner casing and the solid inert material at different temperatures.

The Applicant has also verified that the outer casing, which is sized to withstand the pressure of the fluid, is not affected by the temperature of the fluid, thanks to the cavity with the thermally insulating material, and the material of the outer casing has higher permissible stress limits; it is therefore possible to realize it too with lower thicknesses. In other words, as it is known that the permissible stresses of many materials, including steel, decrease with the increase in temperature, the insulating cavity allows to adopt a lower design temperature of the outer casing and therefore it is possible to adopt for the construction thereof alternatively, less noble materials, and/or lower thicknesses.

The Applicant highlights that the device according to the invention can be provided with both the inner tube and the double enclosure or can be provided with the inner tube but not the double enclosure or, vice versa, can be provided with the double enclosure but not the inner tube.

Further aspects of the invention are described below.

In an aspect according to the second aspect and possibly with one or more of the other aspects, in a step of thermal energy storage, the inlet of the hot fluid in the reservoir occurs through the second conduit and the second opening and the outlet of the cooled fluid from the reservoir occurs through the first opening and the first conduit.

In an aspect according to the second aspect and possibly with one or more of the other aspects, in a step of thermal energy release previously stored in the solid inert material, the inlet of the cold fluid in the reservoir occurs through the first conduit and the first opening and the outlet of the heated fluid from the reservoir occurs through the second opening and the second conduit.

In the step of storage, the charging of the hot fluid in the reservoir and the outlet of the cooled fluid from the reservoir occur at the first end of the reservoir located at the bottom. The hot fluid flows through the whole tube before exiting from the second opening located near the second end of the reservoir located at the top. The hot fluid exiting from the second opening passes then through the solid inert material, releasing heat to the latter, and exits through the first conduit located at the bottom. It is to be noted that in this manner the hot part of the reservoir is always at the top and this helps the maintenance of the heat. In fact vice versa, if the charging would occur from the bottom, in case of partial charging convective phenomena would be initiated that would significantly lengthen the thermocline.

In the step of release, the charging of the cold fluid in the reservoir and outlet of the heated fluid from the reservoir always occur at the first end of the reservoir located at the bottom. The cold fluid enters through the first conduit located at the bottom, goes up through the solid inert material absorbing heat. The heated fluid enters the second opening located near the second end of the reservoir located at the top, flows through the whole tube before exiting through the second conduit. Thus, both during the storage and the release, the tube is passed through by a hot fluid.

The Applicant has verified that in this configuration the hot fluid passes through the tube which lies within the reservoir before exiting from the second opening, so it is possible to avoid or contain heat losses to the environment, which could occur if the tube were external to the reservoir. In fact, if part of the heat of the fluid flowing inside the tube were to pass through the wall of the tube itself, this heat would be stored in the solid inert material.

Furthermore, once the flow of the fluid has ceased, the tube, given its reduced thermal inertia, does not cool suddenly, so that in the subsequent step of storage or in the subsequent step of release, the heat of the fluid within the tube is not spent on reheating again the tube which, if it were external to the reservoir, would have cooled in the meantime.

In an aspect, the reservoir has an elongated cylindrical shape having a prevailing axis of development.

In an aspect, the reservoir has a circular section.

In an aspect, the tube and the reservoir are coaxial.

In an aspect a ratio H/D between a length H of the reservoir (which corresponds to a height in the case of vertical orientation) and an outer diameter D of the reservoir is between 2 and 15, optionally between 5 and 10.

The Applicant has verified that these ratios allow to optimize the heat exchanges and to contain the pressure losses.

In an aspect, in the vertical position of the reservoir, said prevailing axis of development and a main axis of the tube are vertical.

In an aspect, a heating curve T1 of the inner casing follows a heating curve T2 of the solid inert material and, in at least one intermediate section between a minimum temperature Tmin and a maximum temperature Tmax, the heating curve T1 of the inner casing lies below the heating curve T2 of the solid inert material.

The Applicant has verified that in this manner the inner casing expands temporarily after (shortly after) the expansion of the solid inert material and this prevents that, if the solid inert material is incoherent material, said solid inert material may drop in level in the reservoir due to an increase of the containment volume.

In an aspect, the inner casing is free to thermally expand relative to the outer casing. In this manner, both the outer casing and the inner casing are not subjected to mechanical stresses. Possibly, the expansion of the inner casing determines a compression of the insulating material, which, however, does not offer resistance.

In an aspect, the inner casing is constrained to the outer casing by supports configured to avoid thermal bridges.

In an aspect, the supports are spaced by rigid insulating material, such as ceramic matrix material.

In this manner, the transmission of the heat from the inner casing to the outer casing is minimized.

In an aspect, the inner casing and the solid inert material have different thermal expansion coefficients. In the case wherein the solid inert material and the material of the inner casing are different and have different thermal expansion coefficients, it is possible that the inner casing is subject to deformations imposed by the solid inert material which, as mentioned above, can be withstood by the thin inner casing due to the fact that it is capable of working in the elastic field.

In an aspect, a thickness of an inner casing wall is between 1/10 and 1/5 of a thickness of an outer casing wall.

In an aspect, a radial dimension of the cavity is between 5 and 25 times a thickness of an outer casing wall.

In an aspect, a tube wall thickness is between 1/25 and 1/5 of a thickness of an outer casing wall.

In an aspect, a thickness of an inner casing wall is between 1 mm and 15 mm.

In an aspect, a tube wall thickness is between 0.2 mm and 15 mm.

In an aspect, a thickness of an outer casing wall is between 10 mm and 150 mm. In an aspect, the passages of the inner casing are formed in an upper portion of said inner casing. The cavity is in fluid communication with the containment volume only through such passages placed at the top.

In an aspect, a lower portion of the containment volume is sealed with respect to the cavity. In this manner, the fluid cannot bypass the thermal mass, passing only through the cavity, and it prevents any hot fluid bypassing the thermal mass from heating up the outer casing.

In an aspect, the thermally insulating material located in the cavity comprises a plurality of layers, also different from each other. In fact, some materials provide optimal performances at high temperatures, others at intermediate and others at low temperatures.

In an aspect, a thermally insulating coating covers the tube.

The inner tube is insulated with respect to the thermal mass in order to reduce the heat released to the thermal mass, useful for preserving a narrow thermocline.

In an aspect, the thermally insulating coating is placed radially inside or radially outside of the tube.

In other words, the tube is encased so as not to disperse the heat of the fluid towards the solid inert material while still cold before the fluid reaches the second opening and not to ruin the thermocline.

In an aspect, the thermally insulating coating is free to slide axially with respect to the tube due to thermal expansions.

In an aspect, the thermally insulating coating comprises a radially inner sleeve and an insulation located between said radially inner sleeve and the tube.

In an aspect, the only radially inner sleeve or the radially inner sleeve and the insulation are free to slide axially with respect to the tube due to thermal expansions. In an aspect, a ratio between a heat exchange surface and the weight of the material of the tube is between 20 m²/ton and 300 m²/ton.

In an aspect, the first conduit passes through the outer casing and is connected to the inner casing.

In an aspect, the second conduit passes through the outer casing.

In an aspect, the first conduit and/or the second conduit comprises/e a thermally insulating coating, to prevent that the heat reaches the outer casing and to limit heat losses.

In an aspect, the reservoir comprises elements to support the incoherent material disposed in the containment volume, as for example holed shelves or grids.

In an aspect, the elements to support the incoherent material comprise at least one shelve, optionally a plurality of shelves.

In an aspect, said elements to support the incoherent material are placed in the incoherent material.

In an aspect, said elements to support the incoherent material have a thermal inertia similar to a thermal inertia of the incoherent material.

In an aspect, at least one filter is disposed in the or on the first opening and/or in the or on the second opening.

In an aspect, the present invention refers also to an apparatus for storing and releasing thermal energy comprising at least one device as shown in one or more of the preceding aspects.

In an aspect, the apparatus comprises furthermore:
a first external pipeline and a second external pipeline associated with said at least one device, wherein said the first external pipeline is connected to the first conduit and the second external pipeline is connected to the second conduit of the reservoir, wherein the first external pipeline and the second external pipeline are configured to be connected to a hot fluid source or to a cold fluid source;
valves operative on said first external pipeline and second external pipeline and/or on said first conduit and second conduit and configurable to allow the inlet of the hot fluid or of the cold fluid through the first opening and the outlet through the second opening or vice versa.

In an aspect, the apparatus is configured to determine the inlet of the fluid in the reservoir through the second conduit and to determine the outlet of the fluid from the reservoir through the first conduit or vice versa.

In an aspect, the apparatus is configured to carry out a step of thermal energy storage, wherein the hot fluid from the second external pipeline enters in the reservoir through the second conduit, flows in the tube and exits from the second opening, transits through the solid inert material releasing heat to the solid inert material, exits from the reservoir through the first conduit and flows in the first external pipeline.

In an aspect, the apparatus is configured to carry out a step of thermal energy release wherein the cold fluid from the first external pipeline enters in the reservoir through the first conduit, transits through the solid inert material absorbing heat from the solid inert material, enters in the second opening and flows in the tube, exits from the reservoir through the second conduit and flows in the second external pipeline.

In an aspect, the apparatus comprises a plurality of said devices in fluid communication with each other.

In an aspect, the devices of said plurality of devices are connected to each other in series, wherein the second conduit of a device is connected to the first conduit of an adjacent device and the first conduit of a device is connected to the second conduit of an adjacent device.

In an aspect, the devices of said plurality of devices are connected to each other in parallel, wherein the first conduits of the devices are connected to each other in parallel and the second conduits of the devices are connected to each other in parallel.

In an aspect, said plurality of devices comprises batteries of devices.

In an aspect, the devices of each battery are connected to each other in parallel and the batteries are connected to each other in series.

In an aspect, the devices of each battery are connected to each other in series and the batteries are connected to each other in parallel.

The single device is characterized by the energy which can store and by an optimal volumetric flow rate, a function of the thermal power. In order to meet the specifications of the project, it is sufficient to place several devices in parallel in the event there is a need to increase the power or to place several devices in series to increase the energy. Furthermore, putting at least two devices in series allows to bypass a reservoir when it is fully charged or when it is not useful (for example, the fluid exits cold from the previous device) and at the same time allows to reduce the overall pressure losses, allowing to choose a shape of the reservoir with higher height/diameter ratios (H/D) at the same pressure loss and thus to improve performances.

In an aspect, each battery comprises a same number of devices or a different number of devices.

In order to further reduce pressure losses, it is possible to use a central battery with several devices in parallel to each other with respect to the previous battery and the following one.

In an aspect, the devices of said plurality are identical to each other. In this manner it is possible to reduce design and realization costs and to choose the number and the arrangement of such devices to meet specific project requirements.

In an aspect, different devices or different batteries contain different or the same solid inert material.

In an aspect, the reservoir is made of steel, preferably carbon steel.

The Applicant has verified that the apparatus according to the invention overall allows to obtain the following technical, energy and mechanical benefits.

Energy benefits:
- high heat transfer coefficients with the thermal mass and high thermal conductivity of the high thermal mass, i.e. low Biot coefficients;
- reduction of pressure losses of the fluid when crossing the thermal mass;
- reduction of thermal losses to the environment;
- reduction of thermal inertias and therefore reduction of irreversibilities;
- high front of the thermocline without heat flows by conduction inside the reservoir, and therefore reduction of irreversibilities;

Mechanical benefits and therefore cost benefits:
- reduction of the stresses of the reservoir due to a combination of medium/high pressures;
- increase of the permissible stress limits of the reservoir material(s);
- withstanding of high thermal gradients;
- reduction of thermal mass packing problems due to temperature/thermal expansion differences of the reservoir.

The present invention is also relative to an energy transformation and storage plant, comprising at least one apparatus according to one or more of the preceding aspects.

In an aspect, the plant comprises furthermore a hot fluid source and a cold fluid source, wherein the plant is configured to connect said at least one apparatus to the hot fluid source or to the cold fluid source, so that the hot fluid or the cold fluid passes through the containment volume and the solid inert material of the reservoir or reservoirs.

In an aspect, the plant is of the type described in one of the documents WO2021191786A1 and WO2021255578A1, on behalf of the same Applicant, and the apparatus of the present invention is used as a thermal accumulator (Thermal Energy Storage - TES) in these plants.

In an aspect, the plant comprises:
a working fluid other than atmospheric air;
a gasometer or other storage system with low or no overpressure configured to store the working fluid in the gaseous phase and in pressure equilibrium with the atmosphere in every operating condition/step of the plant;
a reservoir configured to store said working fluid in a liquid or supercritical phase with a temperature close to the critical temperature; wherein said critical temperature is close to the ambient temperature, preferably between 0°C and 100°C;
wherein the plant is configured to actuate a closed cyclic thermodynamic transformation, first in one direction in a storage configuration and then in an opposite direction in a discharge configuration, between said enclosure and said reservoir; wherein in the storage configuration the plant stores heat and pressure and in the discharge configuration generates energy;
wherein said apparatus is configured to store the heat in the storage configuration and to release the heat in the discharge configuration.

Examples of storage systems with low or no overpressure are double or triple membrane gasometers, wherein there is a cavity between the inner membrane containing the working fluid and an outer membrane in contact with the environment. The cavity is normally filled with ambient air by means of fans and a constant pressure of a few mbar is maintained, for example 1 to 200 [mbar], preferably 2 to 50 [mbar]. The outer membrane constantly keeps its shape unless there are small variations with the purpose of protecting the inner membrane from the external environment and weather conditions, such as sun, rain, wind, snow, etc.

Other examples of gasometers in equilibrium with the atmosphere are pressure-balloons, or single membrane gasometers, wherein the membrane containing the working fluid is in direct contact with the atmosphere.

Membranes are usually constituted by a PVC-coated polyester fabric, or by the coupling of several materials, the one to give strength to the membrane and the other to make it waterproof. Various additives can also be used to confer resistance to ageing while keeping a high flexibility of the material.

In an aspect, the plant comprises
a working fluid other than atmospheric air;
an enclosure configured to store the working fluid in the gaseous phase and at substantially constant pressure, wherein the working fluid in the enclosure is in pressure equilibrium with the atmosphere and with low or no overpressure;
a reservoir configured to store said working fluid in a liquid or supercritical phase with a temperature close to the critical temperature, wherein said critical temperature is close to ambient temperature;
at least one compressor;
at least one expander;
heat exchangers configured to store thermal energy released from the working fluid or to release thermal energy, previously stored, to the working fluid;
wherein the enclosure is in fluid communication with an inlet of the compressor or with an outlet of the expander, wherein the heat exchangers are in fluid communication with an outlet of the compressor or with an inlet of the expander;
wherein the plant is configured to actuate a closed cyclic thermodynamic transformation, first in one direction in a storage configuration and then in an opposite direction in a discharge configuration, between said enclosure and said reservoir;
wherein in the storage configuration the plant stores heat and pressure and in the discharge configuration generates energy;
wherein the heat exchangers comprise:
   a first heat exchanger defined by said at least one apparatus and positioned between the reservoir and the compressor and between the reservoir and the expander;
   a second heat exchanger operatively active between said at least one apparatus and the reservoir or operatively active in said reservoir.

In an aspect, pipelines and control devices, such as valves, pumps, etc., allow to configure the plant in the storage configuration or in the discharge configuration.

In an aspect, said at least one apparatus is connected such that the working fluid of the plant transits through the containment volumes of the reservoirs of said at least one apparatus; said at least one compressor, in the storage configuration, defining the hot fluid source and said second heat exchanger defining, in the discharge configuration, the cold fluid source.

Alternatively, said at least one apparatus is connected such that the working fluid of the plant exchanges heat with a fluid heat carrier and wherein said fluid heat carrier transits through the containment volumes of the reservoirs of said at least one apparatus.

In an aspect, the working fluid is in the gaseous phase.

In an aspect, the working fluid is chosen in the group comprising: CO₂, SF₆, N₂O, or a mixing of them.

In an aspect, said thermal carrier is a liquid and is chosen in the group comprising: diathermic oil, molten salts and in general fluids used as thermal carriers.

The Applicant has verified that the above shown plant stores the heat in the storage configuration in order to be able to increase the overall efficiency of the system and that the apparatus according to the invention (TES), being very efficient, allows to increase the efficiency and the RTE (Round Trip Efficiency) of the plant in which such apparatus is inserted.

Further features and advantages will appear more from the detailed description of preferred, but not exclusive, embodiments of a device, an apparatus and a plant, according to the present invention.

### Description of figures

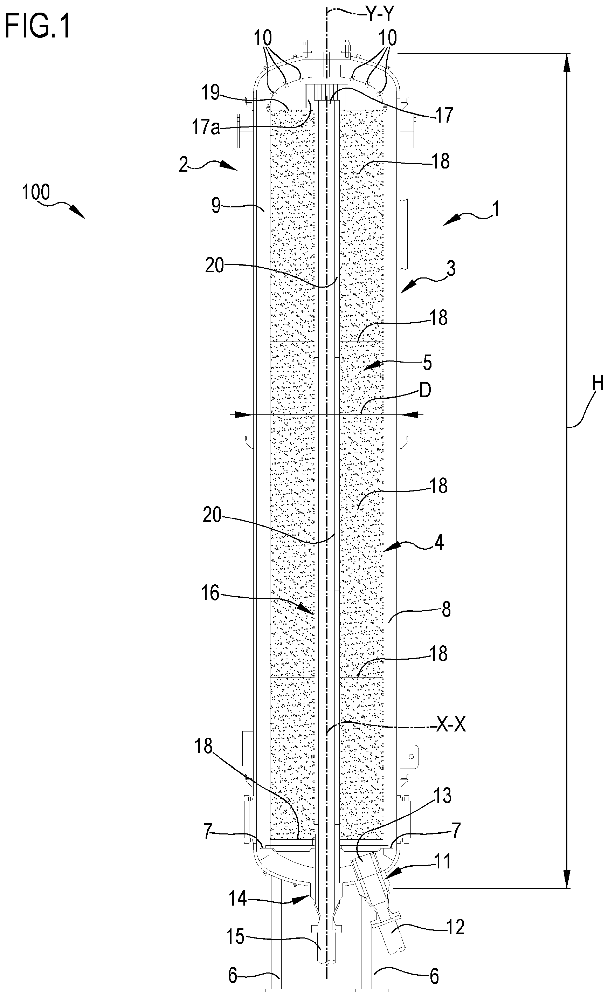

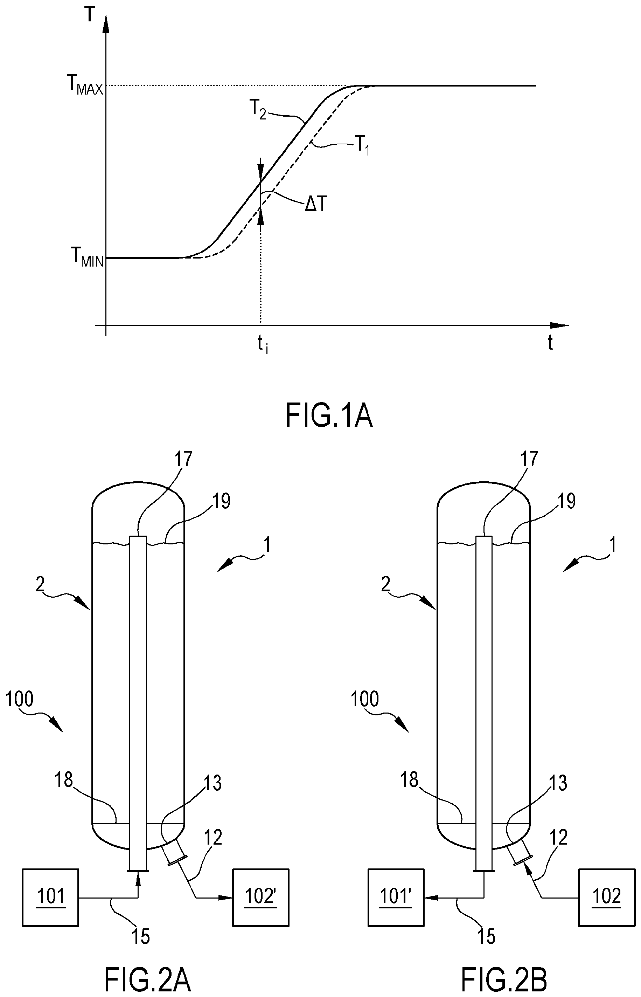

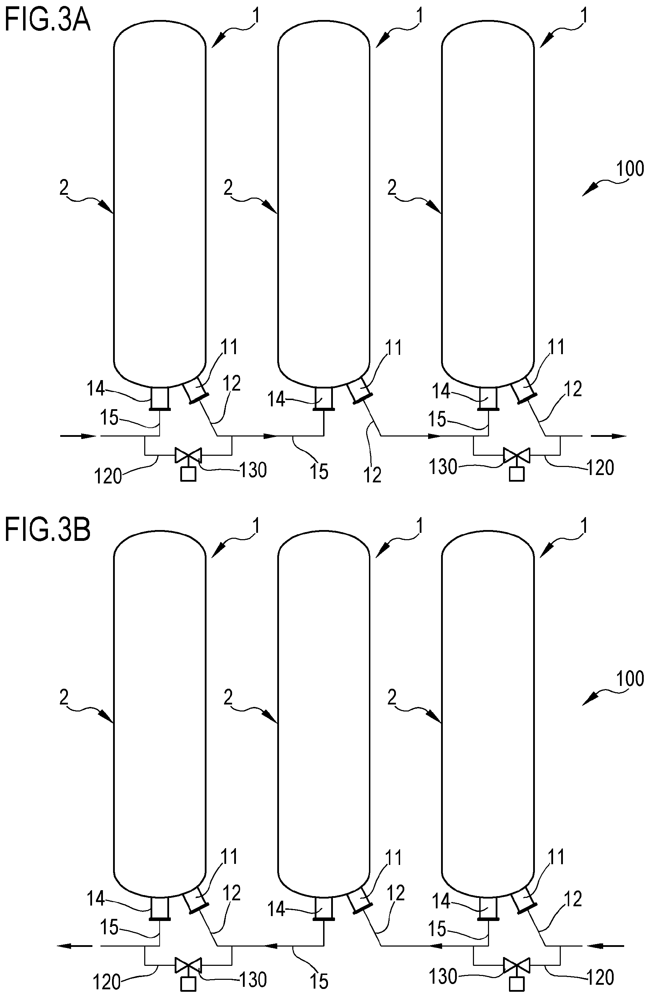

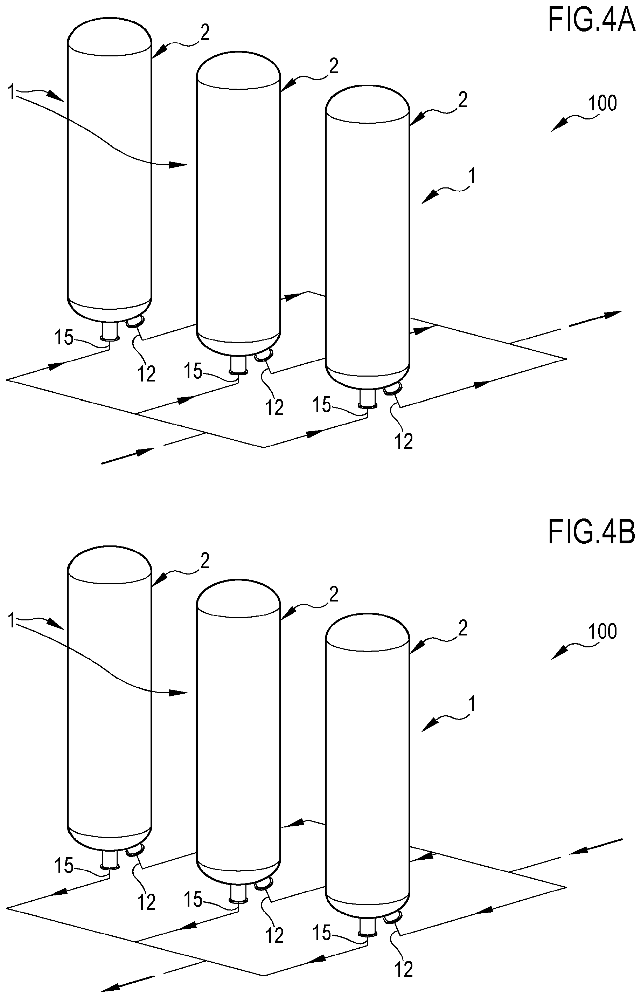

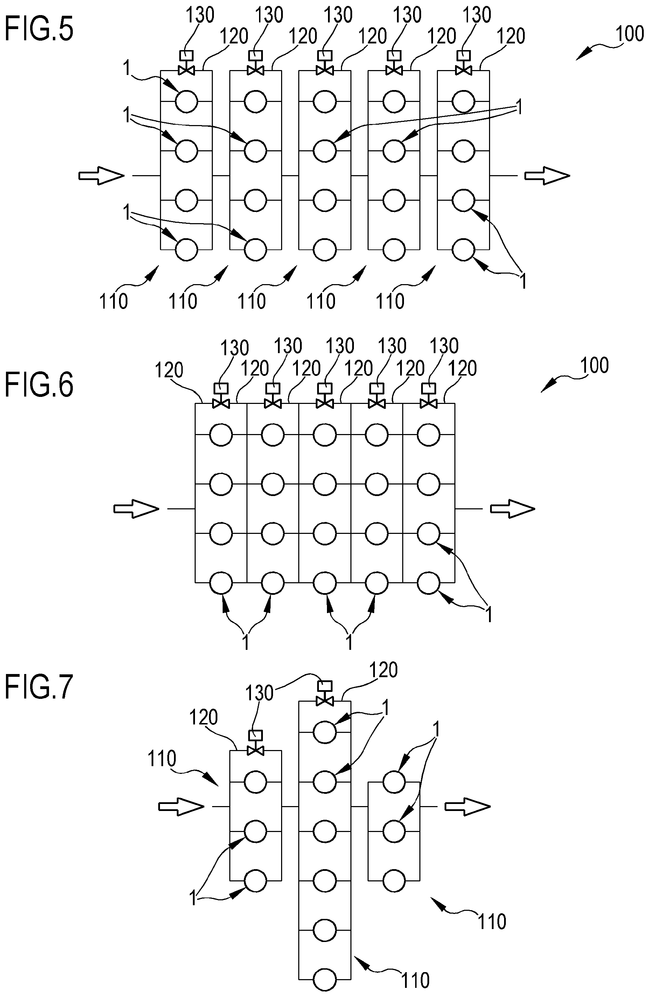

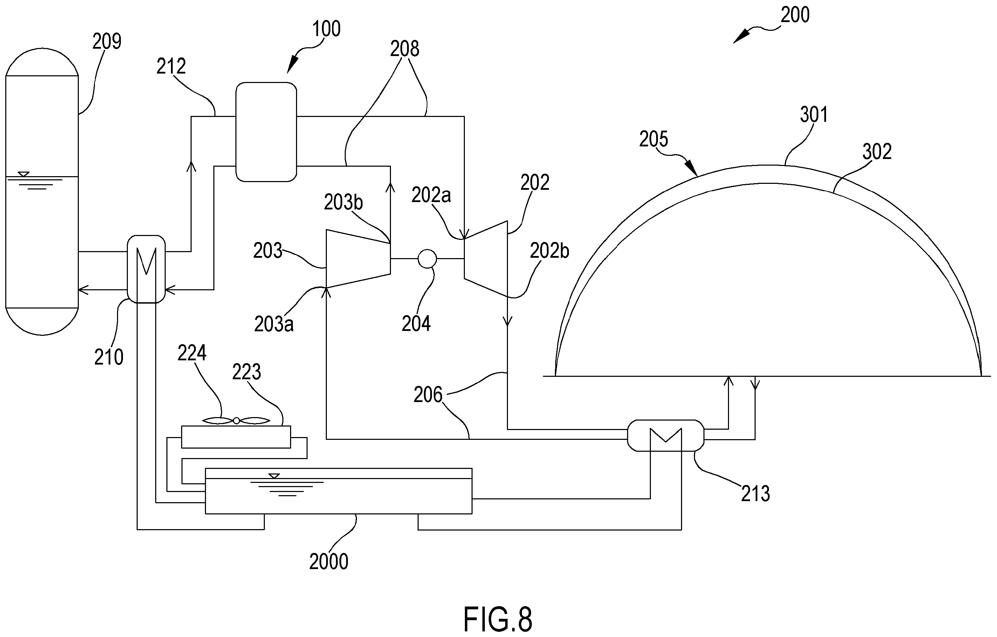

This description will be shown below with reference to the attached drawings, provided for illustrative purposes only and, therefore, not limiting thereto, in which:
▪ figure 1 shows a device for storing and releasing thermal energy according to the present invention;
▪ figures 2A and 2B show schematically the device of figure 1 in respective operating configurations;
▪ figures 3A and 3B show schematically an apparatus for storing and releasing thermal energy comprising many devices, in respective operating configurations;
▪ figures 4A and 4B show schematically a different embodiment of the apparatus of figures 3A and 3B, in respective operating configurations;
▪ figures 5, 6 and 7 show further embodiments of the apparatus for storing and releasing thermal energy;
▪ figure 8 shows an energy transformation and storage plant according to the present invention.

### Detailed description

With reference to the attached figures, with the reference number 1 it has been overall indicated a device for storing and releasing thermal energy according to the present invention. The device according to the invention is of the packed bed type (packed bed at atmospheric pressure or pressurized at low pressure) and comprises a thermal mass configured to be lapped by a fluid that releases or subtracts heat to/from the thermal mass.

The device 1 comprises a reservoir 2. The reservoir 2 comprises an outer casing 3, configured to support the pressure of the fluid, and an inner casing 4 which delimits within itself a containment volume 5. The fluid can be in a gaseous or liquid phase. In the shown embodiment, the reservoir 2 has an elongated cylindrical shape having a prevailing axis of development Y-Y and circular section. The outer casing 3 and the inner casing 4 have an identical or similar shape and dimensions different to each other.

The reservoir 2, when correctly installed to operate, is vertically oriented, i.e. its prevailing axis of development Y-Y is vertical, and lies on the ground or on an appropriate support by means of feet 6 connected to the outer casing 3. Considering H the height of the reservoir 2 and D its diameter, a H/D ratio is between 2 and 15, optionally between 5 and 10, to optimize the heat exchanges and contain the pressure losses. In the example embodiment shown, this H/D ratio is approximately equal to 5. A high height/diameter (H/D) ratio allows to improve performances with the same pressure drop.

The inner casing 4 is constrained to the outer casing 3 by supports 7 configured to avoid thermal bridges and avoid or minimize the transmission of the heat from the inner casing 4 to the outer casing 3. In figure 1 are visible two supports 7 positioned near a first end of the reservoir 2 located at the bottom. The supports 7 are spaced by rigid insulating material, for example ceramic matrix material.

The inner casing 4 and the outer casing 3 are coaxial and are mutually positioned so that they delimit a gap 8 between them whose shape is similar to the one of the reservoirs 2. The cavity 8 is filled with a thermally insulating material 9 to reduce thermal losses to the external environment. The outer casing is little affected by the temperature of the fluid due to the cavity with the thermally insulating material. The thermally insulating material 9 comprises a plurality of layers, not visible in figure 1, concentric to each other and made of different materials, such as for example rock wool, glass wool, ceramic materials, rigid and flexible microporous materials, calcium silicates.

The supports 7 and the compliance of the thermally insulating material 9 are also such as to allow the inner casing 4 to expand freely with respect to the outer casing 3 due to temperature variations. In this manner, both the outer casing 3 and the inner casing 4 are not subjected to high mechanical stresses. The expansion of the inner casing 4 can determine a compression of the insulating material 9, which, however, does not oppose high resistance.

The containment volume 5 is in fluid communication with the cavity 8 by means of passages 10 (for example holes) formed in an upper portion of the inner casing 4, so that allow the fluid to fill also the cavity 8. Elsewhere, however, the containment volume 5 and the cavity 8 are sealed off from each other, so that they prevent any passage of fluid. In particular, a lower portion of the containment volume 5 is sealed with respect to the cavity 8.

A first conduit 11 passes through the outer casing 3, passes through the cavity 8 and is connected to the inner casing 4 such as to put in fluid communication the containment volume 5 with the outside of the reservoir 2, in particular with a first pipeline 12 external to the reservoir 2, and to prevent that the fluid from said first conduit 11 can flow directly into the cavity 8. The first conduit 11 has a first opening 13 that opens in the containment volume 5 at a first end of the reservoir 2 located at the bottom, near the feet 6.

A second conduit 14 passes through the outer casing 3, passes through the cavity 8 and is connected to the inner casing 4 such as to put it too in fluid communication the containment volume 5 with the outside of the reservoir 2, in particular with a second pipeline 15 external to the reservoir 2, and to prevent that the fluid from the second conduit 14 can flow directly into the cavity 8.

The second conduit 14 comprises or is connected to a tube 16 which develops within the containment volume 5.

In the embodiment shown in figure 1, the tube 16 and the reservoir 2 are coaxial, i.e. the prevailing axis of development Y-Y of the reservoir 2 coincides with main axis of the tube 16. The tube 16 extends vertically up to a second end of the reservoir 2 located at the top and ends with a second opening 17 that opens in the containment volume 5, i.e. within the inner casing 4. The second opening 17 is formed on a terminal end of the tube 16 which lies facing the upper portion of the inner casing 4 in which are formed the passages and is spaced from the latter, such as to allow the outlet or the inlet of the fluid from the or in the tube 16 through said second opening 17. Filters can be arranged in the first opening 13 and on the second opening 17. The filter 17a on the second opening 17 is visible in figure 1. The containment volume 5 is delimited by a radially inner surface of the inner casing 4 and by a radially outer surface of the tube 16.

Within the inner casing 4 are positioned supporting elements 18 configured for example as shelves provided with through openings. For example, the shelves are perforated or shaped as grids. A first shelf 18 is located near a lower portion of the containment volume 5 and placed just above the first opening 13. Further shelves 18 are positioned at intervals along the vertical development of the reservoir 2. The shelves 18 are supported by the inner casing 4.

The outer casing 3 and the inner casing 4 are furthermore provided with doors configured to allow to access the containment volume 5, when the device 1 is not operational, and charge said device 1 with incoherent material 19 or discharge the incoherent material 19, to replace it and/or to carry out maintenance. For this purpose, the shelves 18 are also removable.

The incoherent material 19 is a solid inert material which comprises a plurality of bodies or elements not joined together, such as stones or gravel or metal spheres, such as iron, or ceramic, and is configured to retain heat released from the fluid or to release heat to the fluid during the transit of said fluid, according to the process described below.

The incoherent material has a Biot number lower than 1, preferably lower than 0.1. A ratio between a heat exchange surface of the tube 16 and the weight of the material of the tube 16 is preferably between 20 m²/ton and 300 m²/ton.

The elements of the incoherent material 19 lie on the shelves 18 and completely fill a transversal section of the containment volume 5, while still allowing the fluid to transit through the containment volume 5 from the first opening 13 to the second opening 17 or vice versa thanks to the gaps that the elements of the incoherent material 19 delimit between them. The incoherent material 19 defines the previously mentioned packed bed thermal mass.

The filter 17a located on the second opening 17 allows to avoid that, in the discharge step detailed below, the fluid flow drags with it the incoherent material into the tubes and thus allows to fill the inner casing 4 to the top of the containment volume 5, so that to better exploit the containment volume 5 and to improve the ratio between the incoherent material and the inner casing 4.

In embodiment variants not shown in the figures, the solid inert material is cohesive material within which are delimited passages and/or cavities such as a single block of material that has cavities so as to achieve good heat exchange characteristics. The tube 16 comprises a thermally insulating coating 20, i.e. the tube is encased. In the embodiment of figure 1 the thermally insulating coating 20 is placed radially inside a wall of said tube 16. The thermally insulating coating 20 comprises a radially inner case and an insulation clingin to the radially inner case and interposed between said case and the tube 16. The thermally insulating coating 20 is configured so that it can slide axially with respect to the tube 16 in the presence of thermal expansions. In a variant, the insulation of the thermally insulating coating 20 is clinging to the tube 16 and the radially inner case is free to slide axially with respect to the insulation and to the tube 16.

Also the first conduit 11 and/or the second conduit 14 comprise respective thermally insulating coverings, to prevent that the heat reaches the outer casing and to limit thermal losses.

The inner casing 4, the outer casing 3, the tube 16 are made of carbon steel.

The outer casing 3 is sized so that it supports the pressure of the fluid that fills both the inner casing 4 and the cavity 8. The inner casing 4, on the other hand, does not have to support the pressure of the fluid, since the fluid is present in both the containment volume 5 and in the cavity 8. The inner casing 4 can therefore be realized with a reduced thickness with respect to a thickness of the outer casing 3. For example, the thickness of an inner casing 4 wall is between 1/10 and 1/5 of a thickness of an outer casing 3 wall. Also the wall of the tube 16 is thin, for example a thickness of this wall is between 1/25 and 1/5 of the thickness of an outer casing 3 wall. For example, the thickness of the inner casing 4 wall is between 1 mm and 15 mm, the thickness of the wall of the tube 16 is between 0.2 mm and 15 mm and the thickness of the outer casing 3 wall is between 10 mm and 150 mm. A radial dimension of the cavity 8 is between 5 and 25 times a thickness of an outer casing 4 wall.

The limited thickness of the inner casing 4 allows said inner casing 4 to work in the elastic deformation range even if subject to deformations imposed by the incoherent material 19, since the incoherent material 19 also expands. Furthermore, the reduced thickness of the inner casing 4 allows to limit heat flows in the wall of said inner casing 4 that lies in contact with the fluid.

The inner casing 4 is realized so that to have a thermal inertia similar to a thermal inertia of the incoherent material 19, such that the inner casing 4 and the incoherent material 19 heat together. The similarity of thermal inertias allows to avoid mechanical stresses. Furthermore, the inner casing 4 is realized such that a heating curve T1 of the inner casing 4 follows a heating curve T2 of the incoherent material 19 and, in at least one intermediate section between a minimum temperature Tmin and a maximum temperature Tmax, the heating curve T1 of the inner casing 4 lies below the heating curve T2 of the incoherent material 19, as shown in figure 1A. Figure 1A shows the heating curves T1 and T2 in a "Time (t) - Temperature (T)" graph. The temperature is furthermore substantially proportional to the thermal expansion of the inner casing 4 and of the incoherent material 19. At time "ti", the temperature of the incoherent material 19 is greater than the temperature of the inner casing 4 by a ΔT, whereby the inner casing 4 expands temporarily after (shortly after) the expansion of the incoherent material 19 and this prevents that the incoherent material 19 lowers its level in the containment volume 5 of the reservoir 2 due to an increase of said containment volume 5 (due to the temperature increase) prior with respect to the expansion of the incoherent material (again due to the temperature increase).

Furthermore, the inner casing 4 and the incoherent material 19 may have coefficients of thermal expansion different to each other. If the coefficient of thermal expansion of the incoherent material is greater than the coefficient of thermal expansion of the inner casing 4, it is possible that, when the incoherent material 19 and the inner casing 4 heat up, the inner casing 4 is subject to deformations imposed by the incoherent material 19, which can be withstood by the inner casing 4 due to the fact that, being thin, it is able to work in the elastic range.

The various elements of the device 1 are designed so that they work in the elastic range of materials of said device 1, so that there is no permanent deformation "hysteresis" in the various cycles.

The device 1 with the first pipeline 12 and the second pipeline 15 can define per se an apparatus 100 to store and release thermal energy.

The first outer pipeline 12 and the second outer pipeline 15 are configured to be connected to a hot fluid source 101 or to a cold fluid source 102 schematically shown in figures 2A and 2B. Valves, not shown and per se known, are for example operative on the first outer pipeline 12 and/or on the second outer pipeline 15 and/or on the first conduit 11 and/or on the second conduit 14 and are configurable to allow the inlet of the hot fluid through the first opening 13 and the outlet through the second opening 17 or vice versa.

The apparatus 100 is configured to carry out a step of thermal energy storage contained in a hot fluid coming from the hot fluid source 101 or to carry out a step of thermal energy release, previously stored in the incoherent material 19 of the reservoir 2, to a cold fluid coming from the cold fluid source 102.

In the step of thermal energy storage in the incoherent material 19, shown in figure 2A, the hot fluid of the hot fluid source 101 flows through the second outer pipeline 15, enters in the reservoir 2 through the second conduit 14, flows in the tube 16 and exits from the second opening 17, transits downwards through the incoherent material 19 releasing heat to the incoherent material 19, exits from the reservoir 2 through the first opening 13 and the first conduit 11 and flows in the first outer pipeline 12 until a cold fluid storage 102'.

In the step of thermal energy release from the incoherent material 19, shown in figure 2B, the cold fluid of the cold fluid source 102 flows through the first outer pipeline 12, enters in the reservoir 2 through the first conduit 11, transits upwards through the incoherent material 19 absorbing heat from the incoherent material 19, enters in the second opening 17 and flows in the tube 16, exits from the reservoir 2 through the second conduit 14 and flows in the second outer pipeline 15 until the hot fluid storage 101'.

As it can be observed, both in the step of storage and in the release one, the tube 16 is passed through by a hot fluid. The positioning of the tube 16 within the containment volume 5 thus allows to avoid or at least contain thermal losses to the environment outside the reservoir 2, which could occur if the tube were positioned outside the reservoir. Furthermore, once the flow of the fluid through the tube 16 has ceased, the tube 16 does not cool abruptly, so that in the subsequent step of storage or in the subsequent step of release, the heat of the fluid passing within the tube 16 is not spent on reheating again the tube 16 which, if it were external to the reservoir, would have cooled down in the meantime.

Furthermore, in the step of thermal energy storage in the incoherent material 19, the hot fluid is charged within the containment volume 5 from the top (given that the second opening 17 is at the top) and exits from the bottom through the first opening 13. This configuration helps to make the incoherent material work correctly and to optimize its ability to store heat, as the heat always tends to go upwards.

In embodiment variants, the mentioned apparatus 100 comprises a plurality of devices 1 put in fluid communication between them. The devices 1 can be identical or different to each other and also the incoherent material 19 contained in the respective reservoirs 2 can be the same or different.

Figures 3A and 3B show an apparatus 100 which comprises three devices 1 identical between them and connected to each other in series.

The first conduit 11 and the first pipeline 12 of the device 1 on the left are connected to the second pipeline 15 and to the second conduit 14 of the central device 1. The first conduit 11 and the first pipeline 12 of the central device 1 are connected to the second pipeline 15 and to the second conduit 14 of the device 1 on the right. The second pipeline 15 and the second conduit 14 of the device 1 on the left are connected to the hot fluid source 101, not shown. The first conduit 11 and the first pipeline 12 of the device 1 on the left are connected to the cold fluid source 102, not shown.

Bypass conduits 120 with respective bypass valves 130 allow to bypass a reservoir when it is fully loaded or when it is not useful.

In the step of thermal energy storage in the incoherent material 19, shown in figure 3A, the hot fluid of the hot fluid source 101 passes through in succession, one after the other, the three devices 1 and releases heat to the incoherent material 19 of each of the reservoirs 2.

In the step of thermal energy release from the incoherent material 19, shown in figure 3B, the cold fluid of the cold fluid source 102 passes through in succession, one after the other, the three devices 1 and absorbs heat from the incoherent material 19 of each of the reservoirs 2.

Figures 4A and 4B show an apparatus 100 which comprises three identical devices 1 connected in parallel.

The first conduit 11 and the first pipeline 12 of the three devices 1 are connected in parallel, i.e. are all connected directly to the cold fluid source 102.

The second conduit 14 and the second pipeline 15 of the three devices 1 are connected in parallel, i.e. are all connected directly to the hot fluid source 101.

In the step of thermal energy storage in the incoherent material 19, shown in figure 4A, the hot fluid of the hot fluid source 101 passes through simultaneously the three devices 1 and releases heat to the incoherent material 19 of each of the reservoirs 2.

In the step of thermal energy release from the incoherent material 19, shown in figure 4B, the cold fluid of the cold fluid source 102 passes through simultaneously the three devices 1 and absorbs heat from the incoherent material 19 of each of the reservoirs 2.

Connecting several devices 1 in parallel allows to increase the power and connecting several devices 1 in series allows to increase the energy. Using identical devices 1 allows to reduce design and realization costs.

Figure 5 shows an apparatus 100 wherein the devices 1 are in series and in parallel. In particular the apparatus 100 of figure 5 comprises five batteries 110 of devices 1. Each battery 110 comprises four devices 1 connected to each other in parallel (as the ones of figures 4A and 4B). The batteries 110 are connected to each other in series. Each battery 110 comprises furthermore a bypass conduit 120 provided with a respective bypass valve 130 which allows to bypass one or more batteries 110 in case of need.

In a not shown embodiment variant, the devices 1 of each battery 110 are connected to each other in series and the batteries 110 are connected to each other in parallel. Figure 6 shows an apparatus 100 similar to the one of figure 5, wherein the single devices 1 of different batteries 110 connected in series. This arrangement allows the fluid to mix when it exits one battery so that it redistributes the mixing in the next battery.

Figure 7 shows an apparatus 100 similar to the one of figure 5, wherein the batteries 110 are three connected in series. The first and the last battery 110 comprise each one three devices 1 and the central battery 110 comprises six devices 1. The adoption of a central battery 110 with several devices in parallel to each other with respect to the previous and the following battery 110 allows to reduce pressure losses.

For example a temperature of the hot fluid entering the first reservoir or first reservoirs 2 is between 300° C and 500° C, for example of about 400 °C, and a temperature exiting from the last reservoir or last reservoirs 2 is between 5°C and 150°C.

Figure 8 shows a plant 200 for processing and storing energy which comprises an apparatus 100 as above described. This plant 200 can be one of the embodiments described in the public documents WO2021191786A1 and WO2021255578A1, on behalf of the same Applicant. The apparatus 100 according to the present invention is used in the plant 200 as thermal accumulator (Thermal Energy Storage - TES). The plant 200 shown operates with a working fluid other than atmospheric air, for example chosen in the group comprising: carbon dioxide CO₂, sulphur hexafluoride SF₆, nitrous oxide N₂O. The plant 200 is configured to actuate a closed cyclic thermodynamic transformation (TTC), first in one direction in a storage configuration/step and then in an opposite direction in a discharge configuration/step, wherein in the storage configuration the plant 200 stores heat and pressure and in the discharge configuration generates electrical energy.

With reference to figure 8, the plant 200 comprises an expander, for example a turbine 202, and a compressor 203 mechanically connected to a motor-generator shaft 204.

The plant 200 comprises an enclosure 205 defined by a double membrane gasometer comprising an inner membrane 301 containing the working fluid and an outer membrane 302 in contact with the environment. The gasometer is disposed on the surface and is externally in contact with the atmospheric air. The inner membrane 301 of the gasometer delimits within itself a volume configured to contain the working fluid at atmospheric or substantially atmospheric pressure, i.e. in pressure equilibrium with the atmosphere. The outer membrane 302 constantly keeps its shape unless there are small variations with the purpose of protecting the inner membrane from the external environment and weather conditions, such as sun, rain, wind, snow, etc. The cavity delimited between the inner membrane 301 and the outer one 302 is filled with ambient air by means of fans and a constant pressure of a few mbar is maintained. The enclosure 205 can also be realized like any other gas storage system at low or no overpressure, wherein as the volume of the working fluid varies, the pressure is kept constant or substantially constant.

First ducts 206 develop between the enclosure 205 and an inlet 203a of the compressor 203 and between the enclosure 205 and an outlet 202b of the turbine 202 to fluidly connect the inner volume of the enclosure 205 with said compressor 203 and turbine 202. A valve or a valve system, not shown, can be operatively placed on the first ducts 206 to fluidly connect alternatively the enclosure 205 with the inlet 203a of the compressor 203 or the outlet 202b of the turbine 202 with the enclosure 205.

The plant 200 comprises a primary heat exchanger 100 which can be selectively put in fluid communication with an outlet 203b of the compressor 203 or with an inlet 202a of the turbine 202. For this purpose, second ducts 208 develop between the inlet 202a of the turbine 202 and the primary heat exchanger 100 and between the outlet 203b of the compressor 203 and the primary heat exchanger 100.

The primary heat exchanger 100 is defined by the apparatus for storing and releasing thermal energy previously described and object of the present invention.

A valve, or a system of valves, not shown, is operatively placed on the second ducts 208 to fluidly connect alternatively the primary heat exchanger 100 with the inlet 202a of the turbine 202 or the outlet 203b of the compressor 203 with the primary heat exchanger 100.

A reservoir 209 is in fluid communication with the primary heat exchanger 100 and is configured to store the working fluid in a liquid or supercritical phase at a temperature close to the critical temperature. The critical temperature of the working fluid is close to the ambient temperature and is preferably between 0°C and 100°C. A secondary heat exchanger 210 is operatively active upwards of the reservoir 209 and is configured to operate on the working fluid in the step of storage in the reservoir 209.

Third ducts 212 develop between the primary heat exchanger 100 and the reservoir 209 to fluidly connect said primary heat exchanger 100 with said reservoir 209 and with said secondary heat exchanger 210.

In the schematic representation of figure 8, the plant 200 comprises furthermore an additional heat exchanger 213 operatively interposed between the enclosure 205 and the compressor 202 and between the enclosure 205 and the turbine 202.

A basin 2000 with a liquid, typically water, is connected with the heat exchanger and with the additional heat exchanger 213 and is coupled to a radiator 223 provided with an impeller 224.

The heat exchangers are configured to store thermal energy released from the working fluid in the thermal mass and in the liquid of the basin or to release thermal energy, previously stored, to the working fluid.

The plant is configured to actuate a closed cyclic thermodynamic transformation, first in one direction in a storage configuration and then in an opposite direction in a discharge configuration, between said enclosure 205 and said reservoir 209, as described in public documents WO2021191786A1 and WO2021255578A1.

In the storage configuration, the plant 200 stores energy in the form of heat and pressure. In the discharge configuration, the plant 200 generates mechanical energy and transforms it possibly into electrical energy.

In the storage configuration, the working fluid coming from the enclosure 205 is compressed in the compressor 203 and heats up. The working fluid flows then through the primary heat exchanger 100 which works as a cooler to remove heat from the compressed working fluid, cool it down and store the thermal energy removed from said working fluid as heat in the incoherent material of the reservoirs 2. The working fluid releases heat to the liquid of the basin 2000 at the secondary heat exchanger 210, condenses and is stored in the reservoir 209.

In the discharge configuration, the working fluid coming from the reservoir 209 and already heated by the secondary heat exchanger 210 passes through the primary heat exchanger 100 which now works as a heater and releases additional heat, previously stored in the incoherent material 19, to the working fluid and heats it up to then be fed into the turbine 202.

In the embodiment of the plant 200 above shown, it is the working fluid of the plant 200 which transits in gaseous phase through the containment volumes 5 of the reservoirs 2 of the apparatus 100 and exchanges directly heat with the incoherent material 19 inside them. The compressor 203, in the storage configuration, therefore defines the hot fluid source 101 of the apparatus 100 shown generically in figure 2A and the second heat exchanger 210 defines, in the discharge configuration, the cold fluid source 102 shown generically in figure 2B.

In an alternative embodiment, not shown, the apparatus 100 is connected to the rest of the plant 200 such that the working fluid of the plant 200 exchanges heat with a fluid heat carrier, for example a diathermic oil, and the fluid heat carrier transits through the containment volumes 5 of the reservoirs 2 of the apparatus 100 in turn exchanging heat directly with the incoherent material 19 of the reservoirs 2.

### List of elements

- 1: device for storing and releasing thermal energy
- 2: reservoir
- 3: outer casing
- 4: inner casing
- 5: containment volume
- 6: feet
- 7: supports
- 8: cavity
- 9: thermally insulating material
- 10: passages
- 11: first conduit
- 12: first pipeline
- 13: first opening
- 14: second conduit
- 15: second pipeline
- 16: tube
- 17: second opening
- 18: shelves
- 19: solid inert material
- 20: thermally insulating coating
- 100: apparatus for storing and releasing thermal energy.
- 101: hot fluid source
- 101': storage of hot fluid
- 102: cold fluid source
- 102': storage of cold fluid
- 110: battery
- 120: bypass conduit
- 130: bypass valve
- 200: plant
- 202: turbine
- 202a: inlet of the turbine
- 202b: outlet of the turbine
- 203: compressor
- 203a: inlet of the compressor
- 203b: outlet of the compressor
- 204: motor-generator
- 205: enclosure
- 206: first ducts
- 208: second ducts
- 209: reservoir
- 210: secondary heat exchanger
- 212: third ducts
- 213: additional heat exchanger
- 213a: cooler
- 223: radiator
- 224: impeller
- 301: inner membrane
- 302: outer membrane
- 2000: basin
- X-X: main axis of the tube
- Y-Y: prevailing axis of development

## Claims

1. Device for storing and releasing thermal energy, comprising:
a reservoir (2) internally delimiting a containment volume (5);
a first conduit (11) configured to fluidly connect the containment volume (5) with a first pipeline (12) external to the reservoir (2), wherein the first conduit (11) has a first opening (13) that opens in the containment volume (5) at a first end of the reservoir (2);
a second conduit (14) configured to fluidly connect the containment volume (5) with a second pipeline (15) external to the reservoir (2); wherein the second conduit (14) has a second opening (17) that opens in the containment volume (5) at a second end of the reservoir (2) opposite the first end;
solid inert material (19) disposed in the containment volume (5) and configured to allow a fluid to flow through said containment volume (5) from the second opening (17) to the first opening (13) or vice versa;
wherein the solid inert material (19) is configured to retain heat released from the fluid or to release heat to the fluid during the transit of said fluid;
wherein the reservoir (2) is configured to work in a vertical position such that the first end of the reservoir (2) is disposed at the bottom and the second end of the reservoir (2) is disposed at the top;
wherein the first conduit (11) and the second conduit (14) open externally on the first end of the reservoir (2) and the first external pipeline (12) and the second external pipeline (12) are located near said first end;
wherein the second conduit (14) comprises a tube (16) located at least partially within the containment volume (5) and the second opening (17) is formed on a terminal end of said tube (16) located near the second end of the reservoir (2), such that the containment volume (5) is delimited by a radially inner surface of the reservoir (2) and by a radially outer surface of the tube (16);
wherein the reservoir (2) comprises an outer casing (3), configured to withstand a fluid pressure, an inner casing (4), bearing the radially inner surface and delimiting the containment volume (5), and thermally insulating material (9) placed in a cavity (8) delimited between the outer casing (3) and the inner casing (4);
**characterised in that**
the inner casing (4) has passages (10) to allow the fluid to fill also the cavity (8) and to bring the cavity (8) into pressure equilibrium with the containment volume (5).

2. Device according to claim 1, wherein the inner casing (4) has a thermal inertia similar to a thermal inertia of the solid inert material (19).

3. Device according to claim 1 or 2, wherein, in a Time (t) - Temperature (T) graph, a heating curve (T1) of the inner casing (4) follows a heating curve (T2) of the solid inert material (19); and wherein, in at least one intermediate section between a minimum temperature (Tmin) and a maximum temperature (Tmax), the heating curve (T1) of the inner casing (4) lies below the heating curve (T2) of the solid inert material (19).

4. Device according to claim 1, 2 or 3, wherein the inner casing (4) is free to thermally expand relative to the outer casing (3).

5. Device according to any one of claims from 1 to 4, wherein the inner casing (4) is constrained to the outer casing (3) by supports (7) configured to avoid thermal bridges.

6. Device according to any one of claims from 1 to 5, wherein the inner casing (4) and the solid inert material (19) have different thermal expansion coefficients.

7. Device according to any one of claims from 1 to 6, wherein a thickness of an inner casing (4) wall is between 1/10 and 1/5 of a thickness of an outer casing (3) wall; wherein a radial dimension of the cavity (8) is between 5 and 25 times the thickness of the outer casing (3) wall; wherein a tube (16) wall thickness is between 1/25 and 1/5 of the thickness of the outer casing (3) wall.

8. Device according to any one of claims from 1 to 7, comprising a thermally insulating coating (20) covering the tube (16); wherein the thermally insulating coating (20) is placed radially inside or radially outside of the tube (16).

9. Device according to claim 8, wherein the thermally insulating coating (20) is free to slide axially with respect to the tube (16) due to thermal expansion.

10. Device according to any one of claims from 1 to 9, wherein the reservoir (2) has an elongated cylindrical shape having a prevailing axis of development (Y-Y), wherein, in the vertical position of the reservoir (2), said prevailing axis of development (Y-Y) and main axis (X-X) of the tube (16) are vertical.

11. Apparatus for storing and releasing thermal energy, comprising:
at least one device (1) according to one or more of claims 1 to 10,
a first external pipeline (12) and a second external pipeline (12) associated with said at least one device (1), wherein the first external pipeline (12) is connected to the first conduit (11) and the second external pipeline (12) is connected to the second conduit (14), wherein the first external pipeline (12) and the second external pipeline (12) are configured to be connected to a hot fluid source (101) or to a cold fluid source (102);
valves operative on said first external pipeline (12) and second external pipeline (12) and/or on said first conduit (11) and second conduit (14) and configurable to allow the inlet of hot fluid or cold fluid through the second opening (17) and the outlet through the first opening (13) or vice versa.

12. Apparatus according to claim 11, comprising a plurality of said devices (1) in fluid communication with each other; wherein the devices (1) of said plurality of devices (1) are connected to each other in series and/or in parallel.

13. Apparatus according to claim 12, wherein said plurality of devices (1) comprises batteries (110) of devices (1), wherein the devices (1) of each battery (110) are connected to each other in parallel and the batteries (110) are connected to each other in series.

14. Energy transformation and storage plant, comprising:
a hot fluid source (101);
a cold fluid source (102);
at least one apparatus (100) according to at least one of claims 11 to 13;
wherein the plant (200) is configured to connect said at least one apparatus (100) to either the hot fluid source (101) or to the cold fluid source (102), so that the hot fluid or the cold fluid passes through the containment volume (5) and the solid inert material (19) of the reservoir (2) or of the reservoirs (2).

15. Plant according to claim 14, comprising:
a working fluid other than atmospheric air;
an enclosure (205) configured to store the working fluid in the gaseous phase and at substantially constant pressure, wherein the working fluid in the enclosure (205) is in pressure equilibrium with the atmosphere and with low or no overpressure;
a reservoir (209) configured to store said working fluid in a liquid or supercritical phase with a temperature close to the critical temperature, wherein said critical temperature is close to ambient temperature;
at least one compressor (203);
at least one expander (202);
heat exchangers (210, 100) configured to store thermal energy released from the working fluid or to release thermal energy, previously stored, to the working fluid;
wherein the enclosure (205) is in fluid communication with an inlet (203a) of the compressor (203) or with an outlet (202b) of the expander (202), wherein the heat exchangers (210, 100) are in fluid communication with an outlet (203b) of the compressor (203) or with an inlet (202a) of the expander (202);
wherein the plant (200) is configured to actuate a closed cyclic thermodynamic transformation (TTC), first in one direction in a storage configuration and then in an opposite direction in a discharge configuration, between said enclosure (205) and said reservoir (209);
wherein in the storage configuration the plant (200) stores heat and pressure and in the discharge configuration generates energy;
wherein the heat exchangers (201, 100) comprise:
a first heat exchanger defined by said at least one apparatus (100) and positioned between the reservoir (209) and the compressor (203) and between the reservoir (209) and the expander (202);
a second heat exchanger (210) operatively active between said at least one apparatus (100) and the reservoir (209) or operatively active in said reservoir (209);
wherein said at least one apparatus (100) is connected such that the working fluid of the plant (200) transits through the containment volumes (5) of the reservoirs (2) of said at least one apparatus (100); said at least one compressor (202), in the storage configuration, defining the hot fluid source and said second heat exchanger (210) defining, in the discharge configuration, the cold fluid source;
or wherein said at least one apparatus (100) is connected such that the working fluid of the plant (200) exchanges heat with a fluid heat carrier and wherein said fluid heat carrier transits through the containment volumes (5) of the reservoirs (2) of said at least one apparatus (100).

## Patentansprüche

1. Vorrichtung zum Speichern und Abgeben von Wärmeenergie, umfassend:
einen Behälter (2), welcher intern ein Aufnahmevolumen (5) begrenzt;
eine erste Leitung (11), welche dazu eingerichtet ist, das Aufnahmevolumen (5) fluidisch mit einer ersten Leitung (12) außerhalb des Behälters (2) zu verbinden, wobei die erste Leitung (11) eine erste Öffnung (13) aufweist, welche in dem Aufnahmevolumen (5) an einem ersten Ende des Behälters (2) mündet;
eine zweite Leitung (14), welche dazu eingerichtet ist, das Aufnahmevolumen (5) fluidisch mit einer zweiten Leitung (15) außerhalb des Behälters (2) zu verbinden; wobei die zweite Leitung (14) eine zweite Öffnung (17) aufweist, welche in dem Aufnahmevolumen (5) an einem zweiten Ende des Behälters (2) mündet, welches dem ersten Ende gegenüberliegt;
festes Inertmaterial (19), welches in dem Aufnahmevolumen (5) angeordnet und dazu eingerichtet ist, einem Fluid zu ermöglichen, durch das Aufnahmevolumen (5) von der zweiten Öffnung (17) zu einer ersten Öffnung (13) oder umgekehrt zu strömen;
wobei das feste Inertmaterial (19) dazu eingerichtet ist, von dem Fluid abgegebene Wärme zu speichern oder Wärme an das Fluid abzugeben, während des Durchgangs des Fluids;
wobei der Behälter (2) dazu eingerichtet ist, in einer vertikalen Position derart zu arbeiten, dass das erste Ende des Behälters (2) unten und das zweite Ende des Behälters (2) oben angeordnet ist;
wobei die erste Leitung (11) und die zweite Leitung (14) außen an dem ersten Ende des Behälters (2) münden und die erste externe Leitung (12) und die zweite externe Leitung (12) in der Nähe des ersten Endes angeordnet sind;
wobei die zweite Leitung (14) ein Rohr (16) umfasst, welches zumindest teilweise innerhalb des Aufnahmevolumens (5) angeordnet ist, und die zweite Öffnung (17) an einem Anschlussende des Rohrs (16) ausgebildet ist, welches in der Nähe des zweiten Endes des Behälters (2) derart angeordnet ist, dass das Aufnahmevolumen (5) durch eine radial innere Oberfläche des Behälters (2) und durch eine radial äußere Oberfläche des Rohrs (16) begrenzt ist;
wobei der Behälter (2) ein äußeres Gehäuse (3), welches dazu eingerichtet ist, einem Fluiddruck standzuhalten, ein inneres Gehäuse (4), welches die radial innere Oberfläche trägt und das Aufnahmevolumen (5) begrenzt, und thermisch isolierendes Material (9) umfasst, welches in einem Hohlraum (8) angeordnet ist, welcher zwischen dem äußeren Gehäuse (3) und dem inneren Gehäuse (4) begrenzt ist;
**dadurch gekennzeichnet, dass** das innere Gehäuse (4) Durchlässe (10) aufweist, um dem Fluid zu ermöglichen, auch den Hohlraum (8) zu füllen und den Hohlraum (8) in Druckgleichgewicht mit dem Aufnahmevolumen (5) zu bringen.

2. Vorrichtung nach Anspruch 1, wobei das innere Gehäuse (4) eine thermische Trägheit aufweist, welche einer thermischen Trägheit des festen Inertmaterials (19) ähnlich ist.

3. Vorrichtung nach Anspruch 1 oder 2, wobei in einem Zeit (t) - Temperatur (T)-Diagramm eine Heizkurve (T1) des inneren Gehäuses (4) einer Heizkurve (T2) des festen Inertmaterials (19) folgt; und wobei in wenigstens einem Zwischenabschnitt zwischen einer Mindesttemperatur (Tmin) und einer Höchsttemperatur (Tmax) die Heizkurve (T1) des inneren Gehäuses (4) unterhalb der Heizkurve (T2) des festen Inertmaterials (19) liegt.

4. Vorrichtung nach Anspruch 1, 2 oder 3, wobei sich das innere Gehäuse (4) in Bezug auf das äußere Gehäuse (3) thermisch frei ausdehnen kann.

5. Vorrichtung nach einem der Ansprüche 1 bis 4, wobei das innere Gehäuse (4) durch Halterungen (7) an dem äußeren Gehäuse (3) befestigt ist, welche dazu eingerichtet sind, Wärmebrücken zu vermeiden.

6. Vorrichtung nach einem der Ansprüche 1 bis 5, wobei das innere Gehäuse (4) und das feste Inertmaterial (19) unterschiedliche Wärmeausdehnungskoeffizienten aufweisen.

7. Vorrichtung nach einem der Ansprüche 1 bis 6, wobei eine Stärke einer Wand des inneren Gehäuses (4) zwischen 1/10 und 1/5 einer Stärke einer Wand des äußeren Gehäuses (3) beträgt; wobei eine radiale Abmessung des Hohlraums (8) zwischen dem 5-fachen und dem 25-fachen der Stärke der Wand des äußeren Gehäuses (3) beträgt; wobei eine Rohr-(16)-Wandstärke zwischen 1/25 und 1/5 der Stärke der Wand des äußeren Gehäuses (3) beträgt.

8. Vorrichtung nach einem der Ansprüche 1 bis 7, umfassend eine thermisch isolierende Beschichtung (20), welche das Rohr (16) bedeckt; wobei die thermisch isolierende Beschichtung (20) radial innerhalb oder radial außerhalb des Rohrs (16) angeordnet ist.

9. Vorrichtung nach Anspruch 8, wobei die thermisch isolierende Beschichtung (20) aufgrund thermischer Ausdehnung in Bezug auf das Rohr (16) frei axial gleiten kann.

10. Vorrichtung nach einem der Ansprüche 1 bis 9, wobei der Behälter (2) eine längliche zylindrische Form aufweist, welche eine vorherrschende Entwicklungsachse (Y-Y) aufweist, wobei in der vertikalen Position des Behälters (2) die vorherrschende Entwicklungsachse (Y-Y) und eine Hauptachse (X-X) des Rohrs (16) vertikal sind.

11. Einrichtung zum Speichern und Abgeben von Wärmeenergie, umfassend:
wenigstens eine Vorrichtung (1) nach einem oder mehreren der Ansprüche 1 bis 10,
eine erste externe Rohrleitung (12) und eine zweite externe Rohrleitung (12), welche der wenigstens einen Vorrichtung (1) zugeordnet sind, wobei die erste externe Rohrleitung (12) mit der ersten Leitung (11) verbunden ist und die zweite externe Rohrleitung (12) mit der zweiten Leitung (14) verbunden ist, wobei die erste externe Rohrleitung (12) und die zweite externe Rohrleitung (12) dazu eingerichtet sind, mit einer Heißfluidquelle (101) oder mit einer Kaltfluidquelle (102) verbunden zu werden;
Ventile, welche auf die erste externe Rohrleitung (12) und die zweite externe Rohrleitung (12) und/oder auf die erste Leitung (11) und die zweite Leitung (14) wirken und konfigurierbar sind, um den Einlass von heißem Fluid oder kaltem Fluid durch die zweite Öffnung (17) und den Auslass durch die erste Öffnung (13) oder umgekehrt zu ermöglichen.

12. Einrichtung nach Anspruch 11, umfassend eine Mehrzahl der Vorrichtungen (1), welche in fluidischer Verbindung miteinander stehen; wobei die Vorrichtungen (1) der Mehrzahl von Vorrichtungen (1) in Reihe und/oder parallel miteinander verbunden sind.

13. Einrichtung nach Anspruch 12, wobei die Mehrzahl von Vorrichtungen (1) Batterien (110) von Vorrichtungen (1) umfasst, wobei die Vorrichtungen (1) jeder Batterie (110) parallel miteinander verbunden sind und die Batterien (110) in Reihe miteinander verbunden sind.

14. Anlage zur Energieumwandlung und -speicherung, umfassend:
eine Heißfluidquelle (101);
eine Kaltfluidquelle (102);
wenigstens eine Anlage (100) nach wenigstens einem der Ansprüche 11 bis 13; wobei die Anlage (200) dazu eingerichtet ist, die wenigstens eine Anlage (100) entweder mit der Heißfluidquelle (101) oder mit der Kaltfluidquelle (102) derart zu verbinden, dass das heiße Fluid oder das kalte Fluid durch das Aufnahmevolumen (5) und das feste Inertmaterial (19) des Behälters (2) oder der Behälter (2) strömt.

15. Anlage nach Anspruch 14, umfassend:
ein Arbeitsfluid, welches von atmosphärischer Luft verschieden ist;
ein Behältnis (205), welches dazu eingerichtet ist, das Arbeitsfluid in der Gasphase und bei im Wesentlichen konstantem Druck zu speichern, wobei das Arbeitsfluid in dem Behältnis (205) in Druckgleichgewicht mit der Atmosphäre und mit geringem oder keinem Überdruck steht;
einen Behälter (209), welcher dazu eingerichtet ist, das Arbeitsfluid in einer flüssigen oder überkritischen Phase bei einer Temperatur nahe der kritischen Temperatur zu speichern, wobei die kritische Temperatur nahe der Umgebungstemperatur liegt;
wenigstens einen Verdichter (203);
wenigstens einen Expander (202);
Wärmetauscher (210, 100), welche dazu eingerichtet sind, von dem Arbeitsfluid abgegebene Wärmeenergie zu speichern oder zuvor gespeicherte Wärmeenergie an das Arbeitsfluid abzugeben;
wobei das Behältnis (205) in fluidischer Verbindung mit einem Einlass (203a) des Verdichters (203) oder mit einem Auslass (202b) des Expanders (202) steht, wobei die Wärmetauscher (210, 100) in fluidischer Verbindung mit einem Auslass (203b) des Verdichters (203) oder mit einem Einlass (202a) des Expanders (202) stehen;
wobei die Anlage (200) dazu eingerichtet ist, eine geschlossene zyklische thermodynamische Transformation (TTC) zu bewirken, zunächst in einer Richtung in einer Speicherkonfiguration und dann in einer entgegengesetzten Richtung in einer Entladekonfiguration, zwischen dem Behältnis (205) und dem Behälter (209);
wobei die Anlage (200) in der Speicherkonfiguration Wärme und Druck speichert und in der Entladekonfiguration Energie erzeugt;
wobei die Wärmetauscher (201, 100) umfassen:
einen ersten Wärmetauscher, welcher durch die wenigstens eine Anlage (100) definiert ist und zwischen dem Behälter (209) und dem Verdichter (203) sowie zwischen dem Behälter (209) und dem Expander (202) angeordnet ist;
einen zweiten Wärmetauscher (210), welcher operativ zwischen der wenigstens einen Einrichtung (100) und dem Behälter (209) aktiv ist oder operativ in dem Behälter (209) aktiv ist;
wobei die wenigstens eine Einrichtung (100) derart verbunden ist, dass das Arbeitsfluid der Anlage (200) durch die Aufnahmevolumina (5) der Behälter (2) der wenigstens einen Einrichtung (100) strömt; wobei der wenigstens eine Verdichter (202) in der Speicherkonfiguration die Heißfluidquelle definiert und der zweite Wärmetauscher (210) in der Entladekonfiguration die Kaltfluidquelle definiert;
oder wobei die wenigstens eine Einrichtung (100) derart verbunden ist, dass das Arbeitsfluid der Anlage (200) Wärme mit einem fluiden Wärmeträgermedium austauscht und wobei das fluide Wärmeträgermedium durch die Aufnahmevolumina (5) der Behälter (2) der wenigstens einen Einrichtung (100) strömt.

## Revendications

1. Dispositif de stockage et de libération d'énergie thermique, comprenant :
un réservoir (2) délimitant au plan interne un volume de confinement (5) ;
une première conduite (11) configurée pour raccorder fluidiquement le volume de confinement (5) à un premier pipeline (12) externe au réservoir (2), dans lequel la première conduite (11) présente une première ouverture (13) qui s'ouvre dans le volume de confinement (5) au niveau d'une première extrémité du réservoir (2) ;
une seconde conduite (14) configurée pour raccorder fluidiquement le volume de confinement (5) à un second pipeline (15) externe au réservoir (2) ; dans lequel la seconde conduite (14) présente une seconde ouverture (17) qui s'ouvre dans le volume de confinement (5) au niveau d'une seconde extrémité du réservoir (2) opposée à la première extrémité ;
un matériau solide inerte (19) disposé dans le volume de confinement (5) et configuré pour permettre à un fluide de s'écouler à travers ledit volume de confinement (5) depuis la seconde ouverture (17) vers la première ouverture (13) ou *vice versa* ;
dans lequel le matériau solide inerte (19) est configuré pour retenir la chaleur libérée du fluide ou pour libérer la chaleur vers le fluide durant le transit dudit fluide ;
dans lequel le réservoir (2) est configuré pour fonctionner en une position verticale de sorte que la première extrémité du réservoir (2) est disposée au fond et que la seconde extrémité du réservoir (2) est disposée au sommet ;
dans lequel la première conduite (11) et la seconde conduite (14) s'ouvrent au plan externe sur la première extrémité du réservoir (2) et que le premier pipeline externe (12) et le second pipeline externe (12) sont localisés près de ladite première extrémité ;
dans lequel la seconde conduite (14) comprend un tube (16) localisé au moins partiellement à l'intérieur du volume de confinement (5) et la seconde ouverture (17) est formée sur une extrémité terminale dudit tube (16) localisée près de la seconde extrémité du réservoir (2), de sorte que le volume de confinement (5) est délimité par une surface radialement interne du réservoir (2) et par une surface radialement externe du tube (16) ;
dans lequel le réservoir (2) comprend un boîtier externe (3), configuré pour soutenir une pression de fluide, un boîtier interne (4), portant la surface radialement interne et délimitant le volume de confinement (5), et isolant thermiquement un matériau (9) placé dans une cavité (8) délimitée entre le boîtier externe (3) et le boîtier interne (4) ;
**caractérisé en ce que** le boîtier interne (4) présente des passages (10) pour permettre au fluide de remplir également la cavité (8) et de porter la cavité (8) en équilibre de pression avec le volume de confinement (5).

2. Dispositif selon la revendication 1, dans lequel le boîtier interne (4) présente une inertie thermique semblable à une inertie thermique du matériau solide inerte (19).

3. Dispositif selon la revendication 1 ou 2, dans lequel, dans un graphe de Temps (t) - Température (T), une courbe de chauffage (T1) du boîtier interne (4) suit une courbe de chauffage (T2) du matériau solide inerte (19) ; et dans lequel, dans au moins une section intermédiaire entre une température minimale (Tmin) et une température maximale (Tmax), la courbe de chauffage (T1) du boîtier interne (4) repose en-dessous de la courbe de chauffage (T2) du matériau solide inerte (19).

4. Dispositif selon la revendication 1, 2 ou 3, dans lequel le boîtier interne (4) est libre de s'expanser thermiquement par rapport au boîtier externe (3).

5. Dispositif selon l'une quelconque des revendications de 1 à 4, dans lequel le boîtier interne (4) est contraint au boîtier externe (3) par des supports (7) configurés pour éviter des ponts thermiques.

6. Dispositif selon l'une quelconque des revendications de 1 à 5, dans lequel le boîtier interne (4) et le matériau solide inerte (19) présentent différents coefficients d'expansion thermique.

7. Dispositif selon l'une quelconque des revendications de 1 à 6, dans lequel une épaisseur d'une paroi de boîtier interne (4) est comprise entre 1/10 et 1/5 d'une épaisseur d'une paroi de boîtier externe (3) ; dans lequel une dimension radiale de la cavité (8) est comprise entre 5 et 25 fois l'épaisseur de la paroi du boîtier externe (3) ; dans lequel une épaisseur de paroi du tube (16) est comprise entre 1/25 et 1/5 de l'épaisseur de la paroi du boîtier externe (3).

8. Dispositif selon l'une quelconque des revendications de 1 à 7, comprenant un revêtement thermiquement isolant (20) recouvrant le tube (16) ; dans lequel le revêtement thermiquement isolant (20) est placé radialement à l'intérieur ou radialement à l'extérieur du tube (16).

9. Dispositif selon la revendication 8, dans lequel le revêtement thermiquement isolant (20) est libre de coulisser axialement par rapport au tube (16) dû à l'expansion thermique.

10. Dispositif selon l'une quelconque des revendications de 1 à 9, dans lequel le réservoir (2) présente une forme cylindrique allongée ayant un axe prévalent de développement (Y-Y), dans lequel, dans la position verticale du réservoir (2), ledit axe prévalent de développement (Y-Y) et l'axe principal (X-X) du tube (16) sont verticaux.

11. Appareil de stockage et de libération d'énergie thermique, comprenant :
au moins un dispositif (1) selon l'une ou plusieurs des revendications 1 à 10,
un premier pipeline externe (12) et un second pipeline externe (12) associés audit au moins un dispositif (1), dans lequel le premier pipeline externe (12) est raccordé à la première conduite (11) et le second pipeline externe (12) est raccordé à la seconde conduite (14), dans lequel le premier pipeline externe (12) et le second pipeline externe (12) sont configurés pour être raccordés à une source de fluide chaud (101) ou à une source de fluide froid (102) ;
des valves fonctionnant sur lesdits premier pipeline externe (12) et second pipeline externe (12) et/ou sur lesdites première conduite (11) et seconde conduite (14) et pouvant être configurées pour permettre l'entrée de fluide chaud ou de fluide froid à travers la seconde ouverture (17) et la sortie à travers la première ouverture (13) ou *vice versa*.

12. Appareil selon la revendication 11, comprenant une pluralité desdits dispositifs (1) en communication fluidique l'un avec l'autre ; dans lequel les dispositifs (1) de ladite pluralité de dispositifs (1) sont raccordés l'un à l'autre en série et/ou en parallèle.

13. Appareil selon la revendication 12, dans lequel ladite pluralité de dispositifs (1) comprend des batteries (110) de dispositifs (1), dans lequel les dispositifs (1) de chaque batterie (110) sont raccordés l'un à l'autre en parallèle et les batteries (110) sont raccordées l'une à l'autre en série.

14. Installation de transformation et de stockage d'énergie, comprenant :
une source de fluide chaud (101) ;
une source de fluide froid (102) ;
au moins un appareil (100) selon au moins l'une des revendications 11 à 13 ;
dans laquelle l'installation (200) est configurée pour raccorder ledit au moins un appareil (100) soit à la source de fluide chaud (101) soit à la source de fluide froid (102), de sorte que le fluide chaud ou le fluide froid passe à travers le volume de confinement (5) et le matériau solide inerte (19) du réservoir (2) ou des réservoirs (2).

15. Installation selon la revendication 14, comprenant :
un fluide de travail autre que l'air atmosphérique ;
une enceinte (205) configurée pour stocker le fluide de travail dans la phase gazeuse et sous une pression sensiblement constante, dans laquelle le fluide de travail dans l'enceinte (205) se trouve en équilibre de pression avec l'atmosphère et avec une faible, ou aucune, surpression ;
un réservoir (209) configuré pour stocker ledit fluide de travail dans une phase liquide ou supercritique avec une température proche de la température critique, dans laquelle ladite température critique est proche de la température ambiante ;
au moins un compresseur (203) ;
au moins un expanseur (202) ;
des échangeurs thermiques (210, 100) configurés pour stocker l'énergie thermique libérée du fluide de travail ou pour libérer l'énergie thermique, précédemment stockée, vers le fluide de travail ;
dans laquelle l'enceinte (205) se trouve en communication fluidique avec une entrée (203a) du compresseur (203) ou avec une sortie (202b) de l'expanseur (202), dans laquelle les échangeurs thermiques (210, 100) se trouvent en communication fluidique avec une sortie (203b) du compresseur (203) ou avec une entrée (202a) de l'expanseur (202) ;
dans laquelle l'installation (200) est configurée pour actionner une transformation thermodynamique cyclique fermée (TTC), premièrement dans une direction sous une configuration de stockage et ensuite dans une direction opposée sous une configuration de décharge, entre ladite enceinte (205) et ledit réservoir (209) ;
dans laquelle sous la configuration de stockage l'installation (200) stocke de la chaleur et de la pression et sous la configuration de décharge génère de l'énergie ;
dans laquelle les échangeurs thermiques (201, 100) comprennent :
un premier échangeur thermique défini par ledit au moins un appareil (100) et positionné entre le réservoir (209) et le compresseur (203) et entre le réservoir (209) et l'expanseur (202) ;
un second échangeur thermique (210) fonctionnellement actif entre ledit au moins un appareil (100) et le réservoir (209) ou fonctionnellement actif dans ledit réservoir (209) ;
dans laquelle ledit au moins un appareil (100) est raccordé de sorte que le fluide de travail de l'installation (200) transite à travers les volumes de confinement (5) des réservoirs (2) dudit au moins un appareil (100) ; ledit au moins un compresseur (202), sous la configuration de stockage, définissant la source de fluide chaud et ledit second échangeur thermique (210) définissant, sous la configuration de décharge, la source de fluide froid ;
ou dans laquelle ledit au moins un appareil (100) est raccordé de sorte que le fluide de travail de l'installation (200) échange de la chaleur avec un support fluide de chaleur et dans laquelle ledit support fluide de chaleur transite à travers les volumes de confinement (5) des réservoirs (2) dudit au moins un appareil (100).
